# DEMANDE DE BREVET EUROPEEN

(11) **EP 2 103 848 A1**
(43) Date de publication de la demande: **23.09.2009**
(21) Numéro de dépôt: 09155303.2
(22) Date de dépôt: 17.03.2009
(51) Int. Cl.: F16J 15/08

(54) **Joint de culasse pour moteur à combustion interne**

(30) Priorité: 17.03.2008 FR 0851699
(71) Demandeur: Renault s.a.s., 92100 Boulogne-Billancourt (FR); ElringKlinger AG, 72581 Dettingen/Erms (DE)
(72) Inventeur: Kalos, Thomas, 75012 Paris (FR); Weis, Bernd, 72581 Dettingen/Erms (DE)
(74) Mandataire: Largeau, Béatrice

(57) **Abrégé**

Ce joint de culasse (1), destiné apte à être intercalé entre un bloc moteur et une culasse et présentant au moins une zone (formant point triple, dans laquelle l'étanchéité du joint doit être assurée par sa tranche en vis-à-vis d'un élément (8) accolé et fixé au bloc moteur, notamment d'un carter de distribution, est caractérisé par le fait que, d'une part, ladite zone présente un bord (5) non rectiligne, de longueur développée accrue, et que l'étanchéité à ce niveau est assurée au moyen d'un joint d'étanchéité (9) en matériau souple et élastique interposé entre ledit élément (8) et ledit bord non rectiligne (5).

## Description

L'invention concerne un joint de culasse pour moteur à combustion interne.

Sur la plupart des moteurs refroidis par eau, un tel joint est intercalé, en étant comprimé, entre le bloc moteur - ou carter cylindres - et la culasse.

Sa fonction est d'assurer l'étanchéité entre ces deux éléments ainsi qu'entre les ouvertures traversant leur interface, à savoir les alésages de cylindre, les canaux de circulation d'huile et d'eau et les passages des goujons de fixation de la culasse sur le bloc moteur.

Un joint de culasse classique, parfois appelé « multi feuilles » est composé de trois tôles superposées solidaires les unes des autres, à savoir une tôle centrale, ou cale, et deux tôles extérieures (plus fines) entre lesquelles la cale est prise en sandwich.

Les tôles extérieures sont nervurées, afin de parfaire l'étanchéité.

La tôle centrale présente des surépaisseurs, en particulier des surépaisseurs annulaires, appelées « stoppeurs », qui entourent le bord des alésages des cylindres et sont destinées également à assurer une étanchéité parfaite à ce niveau afin d'empêcher l'échappement des gaz de combustion.

Il existe donc deux plans de joint principaux, correspondant aux plans de contact du joint de culasse, d'une part contre le bloc moteur (par l'intermédiaire de la tôle extérieure inférieure), d'autre part contre la culasse (par l'intermédiaire de la tôle extérieure supérieure).

Sur certaines configurations de moteur, il existe au moins un plan de joint additionnel, appelé usuellement « point triple », situé au niveau de la tranche du joint de culasse, notamment au niveau de l'interface entre le carter de distribution et le bloc moteur en bout duquel il est monté.

Le carter de distribution sert de logement à la chaîne de distribution qui assure l'entraînement de l'arbre (ou des arbres) à cames qui commandent les soupapes du moteur.

De manière classique, le bord du joint de culasse est droit (rectiligne) à ce niveau et l'étanchéité y est assurée par interposition d'inserts en matière élastomère, élastiquement déformables, intégrés au joint de culasse, ou par enduction de silicone flué sur la tranche et/ou sous le joint de culasse au niveau du point triple.

Malheureusement ces solutions sont onéreuses à mettre en oeuvre et à mettre au point, et en général peu robustes.

A cet égard, il convient de noter que l'étanchéité au droit du point triple est particulièrement délicate à obtenir en raison des mouvements relatifs et des contraintes élevées rencontrés dans cette zone, de la discontinuité des joints et du désalignement relatif des pièces résultant des tolérances de fabrication et des dilatations en cours de fonctionnement.

L'objectif de l'invention est de pallier ces difficultés.

L'invention a donc pour objet un joint de culasse pour moteur à combustion interne, apte à être intercalé, en étant comprimé, entre un bloc moteur et une culasse, et présentant au moins une zone formant point triple, dans laquelle l'étanchéité du joint doit être assurée par sa tranche en vis-à-vis d'un élément accolé et fixé au bloc moteur, notamment d'un carter de distribution.

Ce joint de culasse est caractérisé par le fait que, d'une part, cette zone formant point triple présente un bord non rectiligne, de longueur développée accrue (c'est-à-dire plus grande que si le bord était droit), et que l'étanchéité à ce niveau est assurée au moyen d'un joint d'étanchéité en matériau souple et élastique interposé entre ledit élément et ledit bord non rectiligne.

Grâce à cet agencement, la longueur que doit parcourir un fluide pour une éventuelle fuite est augmentée, ce qui réduit par conséquent le risque d'une telle fuite.

De plus, la résistance de la liaison entre l'élément en question et le joint de culasse est améliorée, notamment en cisaillement.

Par ailleurs, selon un certain nombre de caractéristiques additionnelles possibles de l'invention :
- ledit joint d'étanchéité est un joint dit "flué", habituellement appelé "joint silicone". Il faut noter que le joint de culasse peut également être utilisé sans joint flué, par exemple avec un joint de distribution en élastomère ;
- le joint d'étanchéité est soumis à un fluage au cours de son application dans ladite zone formant point triple, contre le bord non rectiligne ;
- le joint d'étanchéité est collé contre le bord non rectiligne ,
- le bord non rectiligne présente un contour alternant des parties en saillie et des parties en creux ;
- le bord non rectiligne présente un contour ondulé, crénelé, en zig-zag, ou de forme similaire ;
- le joint de culasse de culasse possède une paire de zones distinctes formant points triples, espacées l'une de l'autre ;
- ces zones sont placées sur des appendices situés dans les angles de l'une de ses extrémités ;
- le joint de culasse comporte un joint en élastomère situé en vis-à-vis d'un joint à base de silicone.

D'autres caractéristiques et avantages de l'invention apparaîtront à la lecture de la description qui va maintenant en être faite en se référant aux dessins annexés, sur lesquels :

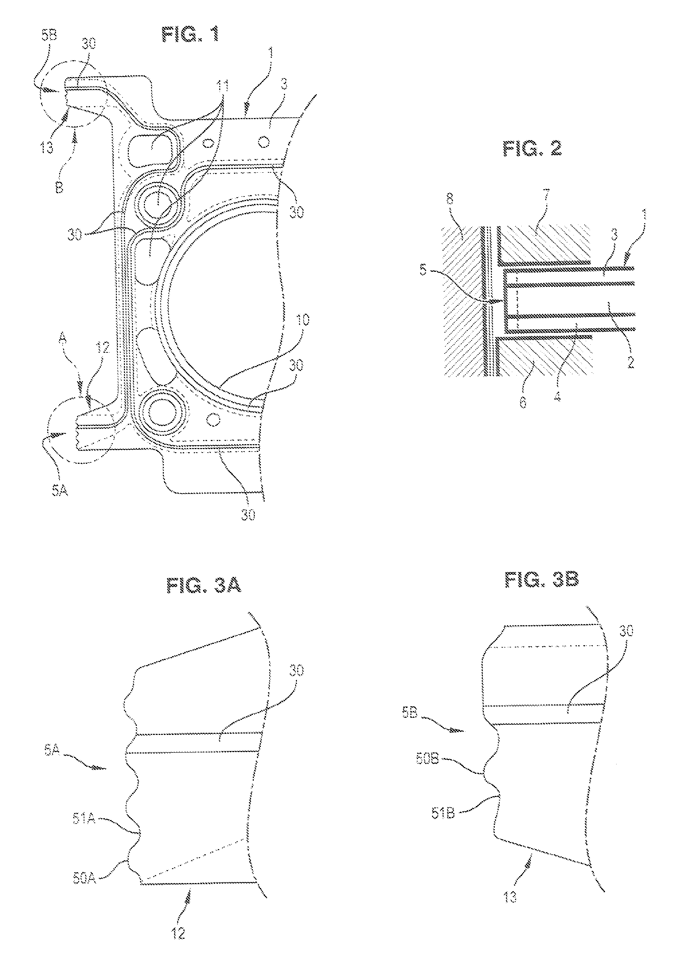

La figure 1 est une vue de dessus partielle d'un joint conforme à l'invention. qu'est un point triple, et à expliquer la problématique qui y est liée.
Les figures 3A et 3B sont des détails, à plus grande échelles, représentant les deux zones de point triple contenues dans les cercles référencés A et, respectivement, B sur la figure 1.
Les figures 4 et 5 sont des vues schématiques destinées à montrer comment s'opère la liaison étanche dans l'une ou l'autre de ces zones, par mise en place d'un joint de silicone, et fluage de celui-ci.
Le joint de culasse 1 représenté vu de dessus a une forme générale globalement rectangulaire, le dessin de la figure 1 en montrant seulement une partie d'extrémité, au niveau de l'un de ses petits côtés.
Il s'agit par exemple d'un joint de culasse « multi feuilles », tel que décrit plus haut, dont seule la tôle supérieure 3 est visible sur cette figure.
La référence 10 désigne une ouverture (vue partiellement) destinée à venir en correspondance avec un alésage de cylindre du bloc moteur, tandis que la référence 11 désigne d'autres ouvertures, servant au passage d'eau, d'huile ou de goujons de fixation par exemple.
La référence 30 désigne des nervures de la tôle supérieure 3.
Le petit côté de ce joint de culasse qui est visible sur la figure 1 est pourvu, au niveau des angles opposés de ce côté, d'une paire d'appendices 12, 13 en forme d'oreilles.
Celles-ci sont destinées à prendre appui par leur face frontale et verticale, de manière étanche, contre des faces d'appui correspondantes prévues sur un élément accolé et fixé au bloc moteur, notamment un carter de distribution.
Sur la coupe de la figure 2 on distingue le joint de culasse 1 comprenant une tôle centrale 2 prise en sandwich entre une tôle inférieure 4 et la tôle supérieure 3, et dont le chant 5 se trouve en regard dudit élément 8.
C'est cette zone qui constitue le point triple, au niveau duquel une liaison étanche, robuste et efficace doit être réalisée.
Dans le mode de réalisation ici décrit, il y a en l'occurrence deux points triples qui correspondent aux portions de chant 5A et 5B des deux appendices 12 et 13.
Comme on le voit sur la figure 3A, le contour de la portion de chant 5A est ondulé, composé de bossages 50A et de creux 51A en arc de cercle, alternés de manière à présenter approximativement un profil sinusoïdal.
Comme on le voit sur la figure 3B, le contour de la portion de chant 5B possède des bossages 50B et des creux 51 B similaires.

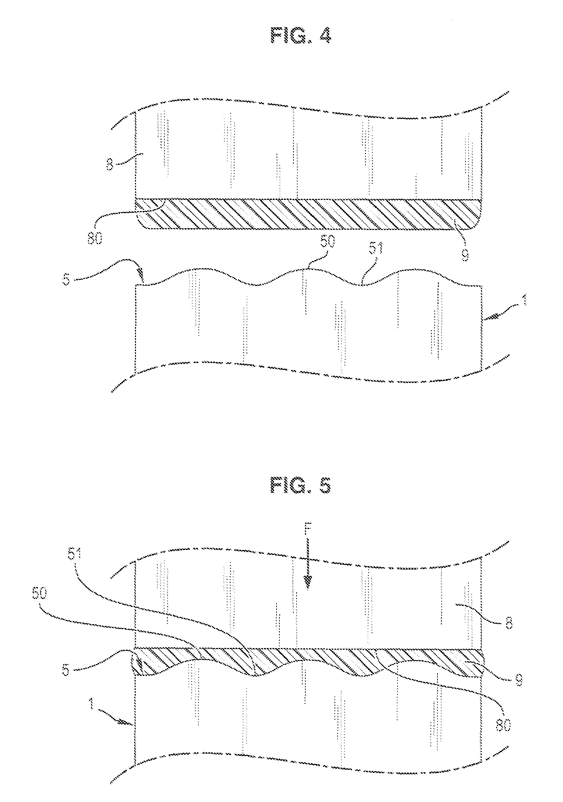

Les figures 4 et 5 sont des schémas montrant comment est réalisée la liaison étanche de l'élément 8 contre le chant 5 du joint de culasse 1 dans l'une ou l'autre de ces deux zones de point triple.
Celle-ci est réalisée avec interposition d'un joint 9 en matériau souple et élastique, malléable et durcissable, par exemple en silicone, à base de silicone, ou en matériau similaire.
Avant d'accoler et de fixer l'élément 8 contre le bloc cylindre, on dépose le joint 9, initialement pâteux et relativement fluide, par exemple par enduction, sur la portion 80 de sa face qui doit venir s'appliquer contre le chant 5 du joint de culasse 1.
Ce dépôt initial est illustré sur la figure 4.
En vue de sa fixation contre le bloc moteur 6, l'élément 8 est rapproché de ce dernier et lui est accolé, comme cela est symbolisé par la flèche F sur la figure 5. Il en résulte un écrasement du joint 9, en matériau malléable, qui flue en occupant l'espace disponible entre la portion plane 80 et la face ondulée 5, prenant une forme correspondante. Après mise en forme, il se solidifie en se collant par chacune de ses deux grandes faces aux surfaces 80 et 5.
L'imbrication de la matière du joint 9 dans les creux 51 assure son bon ancrage contre la face 5, et contribue à sa résistance au cisaillement.
Grâce à cette configuration, et comme déjà indiqué plus haut, on obtient un joint souple 9 particulièrement résistant aux contraintes et aux
mouvements relatifs de l'élément 8 par rapport au bloc moteur 6 (et corrélativement par rapport au joint de culasse 1 qui en est solidaire). De plus ce joint 9 est très efficace pour assurer l'étanchéité, les éventuelles fuites de fluide par la tranche du joint de culasse étant contrariées par la forme ondulée, qui augmente la longueur de trajectoire que ces fluides ont à parcourir pour pouvoir s'échapper.
D'autres profils qu'un profil de type sinusoïdal peuvent bien entendu être prévus, par exemple un profil crénelé.
L'invention peut également s'appliquer à des points dits « quadruples » pouvant se rencontrer notamment lorsque le carter de distribution (ou tout autre élément) 8 est en deux parties, l'une située en regard du bloc cylindres et l'autre en regard de la culasse.

## Revendications

1. Joint de culasse (1) pour moteur à combustion interne, apte à être intercalé, en étant comprimé, entre un bloc moteur (6) et une culasse (7), et présentant au moins une zone (12, 13) formant point triple, dans laquelle l'étanchéité du joint doit être assurée par sa tranche en vis-à-vis d'un élément (8) accolé et fixé au bloc moteur (6), notamment d'un carter de distribution, **caractérisé par le fait que**, d'une part, ladite zone (12, 13) présente un bord (5) non rectiligne, de longueur développée accrue, et que l'étanchéité à ce niveau est assurée au moyen d'un joint d'étanchéité (9) en matériau souple et élastique interposé entre ledit élément (8) et ledit bord non rectiligne (5).

2. Joint de culasse (1) selon la revendication 1, **caractérisé par le fait que** ledit joint d'étanchéité (9) est en silicone ou en un matériau à base de silicone.

3. Joint de culasse (1) selon la revendication 1 ou la revendication 2, **caractérisé par le fait que** ledit joint d'étanchéité (9) est soumis à un fluage au cours de son application dans ladite zone (12, 13), contre le bord non rectiligne (5).

4. Joint de culasse (1) selon l'une quelconque des revendications 1 à 3, **caractérisé par le fait que** ledit joint d'étanchéité (9) est collé contre le bord non rectiligne (5).

5. Joint de culasse (1) selon l'une quelconque des revendications 1 à 4, **caractérisé par le fait que** ledit bord non rectiligne (5) présente un contour alternant des parties en saillie (50) et des parties en creux (51).

6. Joint de culasse (1) selon la revendication 5, **caractérisé par le fait que** ledit bord non rectiligne (5) présente un contour ondulé, crénelé, en zig-zag, ou de forme similaire.

7. Joint de culasse (1) selon l'une quelconque des revendications 1 à 6, **caractérisé par le fait qu'**il possède une paire de zones distinctes (12, 13) formant points triples, espacées l'une de l'autre.

8. Joint de culasse (1) selon la revendication 7, **caractérisé par le fait que** lesdites zones distinctes (12, 13) formant points triples, sont placées sur des appendices situés dans les angles de l'une de ses extrémités.

9. Joint de culasse (1) selon l'une des revendications précédentes, **caractérisé par le fait qu'**il comporte un joint en élastomère situé en vis-à-vis d'un joint à base de silicone.
